# DEMANDE DE BREVET EUROPEEN

(11) **EP 0 615 827 A1**
(43) Date de publication de la demande: **21.09.1994**
(21) Numéro de dépôt: 94400510.7
(22) Date de dépôt: 09.03.1994
(51) Int. Cl.: B29C 45/14, B65D 43/16

(54) **Procédé pour réaliser une boîte avec étiquettes**

(30) Priorité: 15.03.1993 FR 9303056
(71) Demandeur: ROUXEL S.A., F-91410 Dourdan (FR)
(72) Inventeur: GLEIZES Daniel, F-91300 MASSY (FR); LEROUX, Dominique, F-45300 SERMAISES (FR)
(74) Mandataire: Flavenot, Bernard

(57) **Abrégé**

La présente invention concerne les procédés pour réaliser une boîte comportant un bac, un couvercle et un charnière réalisés d'une seule pièce en une matière moulable, et deux étiquettes.

Le procédé se caractérise essentiellement par le fait qu'il consiste au moyen de deux demi-moules (21,22) comportant deux empreintes (23,24) des bac, charnière et couvercle, à amener et maintenir une étiquette (6) devant l'entrée de l'empreinte (26) et en regard de l'empreinte (27), maintenir l'autre étiquette (7) contre l'empreinte (31), déplacer les demi-moules (21,22) au contact, injecter de la matière moulable (45) entre ces deux demi-moules (21,22) par au moins deux buses d'injection (41,42) se trouvant respectivement au sommet (47) de l'empreinte (27) et sur l'empreinte (31) du couvercle, en regard des étiquettes, laisser solidifier la matière, puis démouler la pièce avec ses deux étiquettes.

## Description

La présente invention concerne les procédés pour réaliser une boîte comportant un bac, un couvercle, une charnière d'articulation du bac et du couvercle, et deux étiquettes respectivement disposées sur le fond du bac et sur le couvercle de façon qu'elles soient situées sur la surface extérieure du bac et du couvercle quand ce dernier recouvre le bac, et plus particulièrement les procédés pour réal iser des boîtes en matière plastique ou analogue pour le conditionnement, le rangement ou la conservation des aliments sous toutes formes, dans des réfrigérateurs, congélateurs, etc.

Il existe des procédés permettant de réaliser des boîtes comportant un bac, un couvercle et des étiquettes par exemple situées sur le fond du bac et/ou sur le couvercle. En revanche, il n'existe pas de procédé qui permette de réaliser, en une seule opération de moulage, une boîte comprenant un bac, un couvercle, une charnière et deux étiquettes collées, pendant l'opération de moulage, respectivement sur le fond du bac et sur le couvercle.

La présente invention a ainsi pour but de mettre en oeuvre un procédé pour réaliser une boîte comprenant un bac, un couvercle, une charnière et au moins deux étiquettes collées, pendant la réalisation du bac, du couvercle et de la charnière, respectivement sur au moins le fond du bac et sur le couvercle, qui soit d'une mise en oeuvre aisée et qui demande un minimum de manipulations pour diminuer le coût de revient des boîtes ainsi réalisées.

Plus précisément, la présente invention a pour objet un procédé pour réaliser une boîte comportant:
- un bac,
- un couvercle,
- une charnière reliant le couvercle et le bac de façon que ledit couvercle puisse venir, par rotation, recouvrir ledit bac et délimiter ainsi un volume fermé, le bac, la charnière et le couvercle étant réalisés d'une seule pièce en une matière moulable, et
- deux première et seconde étiquettes disposées respectivement sur au moins le fond dudit bac et sur ledit couvercle de façon qu'elles soient situées sur la paroi extérieure dudit bac et dudit couvercle quand ce dernier recouvre ledit bac, caractérisé par le fait qu'il consiste à:
- réaliser deux premier et second demi-moules, chaque demi-moule comportant une empreinte définissant une demi-enveloppe du bac, de la charnière et du couvercle lorsque ledit volume est ouvert, les deux empreintes formant, quand les demi-moules sont accolés, un espace vide définissant la forme de l'enveloppe extérieure desdits bac, charnière et couvercle lorsque ledit volume est ouvert, le premier demi-moule comportant l'empreinte en creux correspondant à la paroi extérieure dudit bac et le second demi-moule comportant l'empreinte en relief correspondant à la paroi intérieure dudit bac,
- amener et maintenir la première étiquette devant l'entrée de l'empreinte en creux de la paroi extérieure dudit bac,
- amener et maintenir la seconde étiquette contre l'empreinte dudit couvercle sur le second demi-moule,
- déplacer au moins l'un des deux premier et second demi-moules pour les amener au contact l'un de l'autre et former ledit espace vide, l'empreinte en relief du bac poussant la première étiquette vers le fond de l'empreinte en creux de la paroi extérieure dudit bac,
- injecter de ladite matière de moulage en fusion dans ledit espace vide jusqu'à le remplir, simultanément par au moins deux premier et second points d'injection se trouvant respectivement au sommet de l'empreinte en relief de la paroi intérieure dudit bac et sur l'empreinte du couvercle située sur ledit second demi-moule, en des endroits où ils sont en regard respectivement des deux première et seconde étiquettes lorsque les deux demi-moules sont accolés, ladite injection de matière moulable s'effectuant tout en relâchant le maintien de ladite seconde étiquette de façon que la matière moulable en fusion repousse cette seconde étiquette contre l'empreinte du couvercle située sur le premier demi-moule,
- laisser solidifier ladite matière moulable introduite dans ledit espace vide,
- éloigner au moins l'un des deux demi-moules de l'autre quand la matière contenue dans ledit espace est solidifiée, et à
- éjecter de l'un des deux demi-moules, ladite boîte ainsi réalisée.

D'autres caractéristiques et avantages de la présente invention apparaîtront au cours de la description suivante donnée en regard des dessins annexés à titre illustratif, mais nullement limitatif, dans lesquels:
la figure 1 représente, dans une vue en coupe et dans sa position ouverte, un exemple de boîte pouvant être réalisée avec le procédé selon l'invention,
La figure 2 représente une vue en coupe et en perspective de la boîte selon la figure 1, mais dans sa position fermée,
Les figures 3 et 4 représentent, à titre illustratif, deux exemples d'étiquettes pouvant entrer dans la réalisation de la boîte selon les figures 1 et 2, et
Les figures 5, 6 et 7 représentent, sous forme schématique et en coupe, trois schémas illustrant trois des différentes étapes de la mise en oeuvre du procédé selon l'invention.

Les sept figures représentent une même boîte réalisée par la mise en oeuvre du procédé selon l'invention. En conséquence, les mêmes références y désignent les mêmes éléments, quelle que soit la figure sur laquelle elles apparaissent.

Le procédé selon l'invention permet de réaliser une boîte 1 comportant un bac 2, un couvercle 3, une charnière 4 reliant le couvercle et le bac de façon que le couvercle 3 puisse venir, par rotation, recouvrir le bac 2 et délimiter ainsi un volume fermé 5, le bac, la charnière et le couvercle étant réalisés d'une seule pièce en une matière moulable.

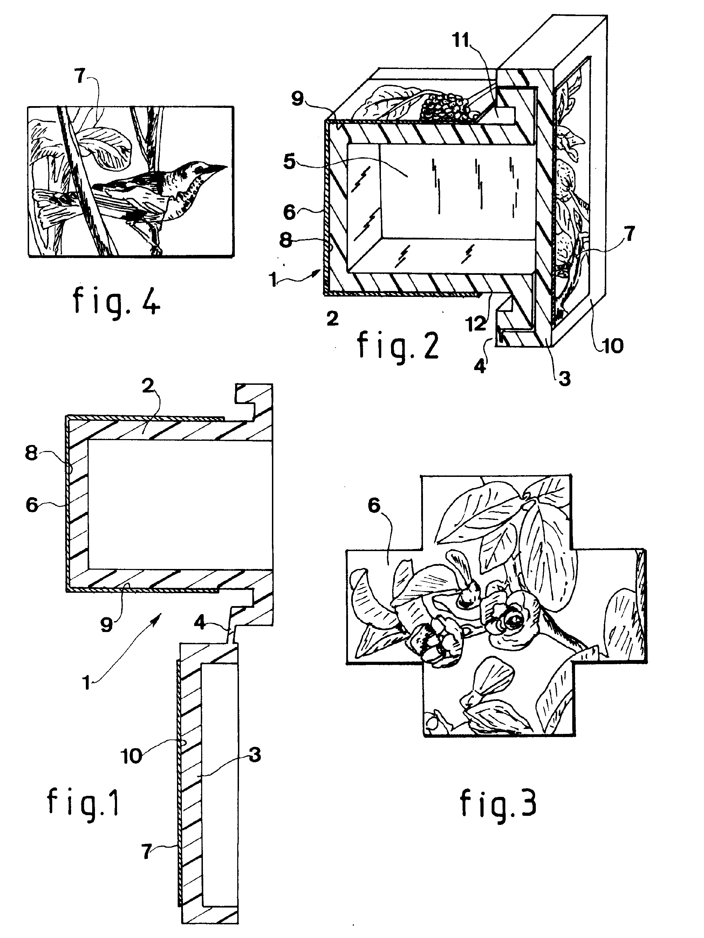

La figure 1 représente la boîte 1 en position ouverte avec son couvercle 3 ne recouvrant pas le bac 2, tandis que la figure 2 représente la boîte en position fermée avec le couvercle recouvrant le bac.

La boîte comporte en outre deux première 6 et seconde 7 étiquettes disposées respectivement sur au moins le fond 8 du bac 2 et sur le couvercle 3 de façon à être situées sur la paroi extérieure 9, 10 du bac 2 et du couvercle 3 quand ce dernier recouvre le bac comme illustré sur la figure 2. Pour une réalisaition avantageuse de cette boite, l'étiquette 6 disposée sur le fond 8 du bac a la forme d'une croix comme celle qui est illustrée sur la figure 3, pour qu'elle puisse venir, non seulement recouvrir le fond 8 du bac, mais aussi, par repliement des branches de la croix, les quatre côtés 11, 12,... bordant ce fond 8 (figure 2).

Dans l'exemple illustré, l'étiquette 7 qui doit être collée sur le couvercle 3 a une forme rectangulaire (figure 4), mais cette forme n'est pas exclusive.

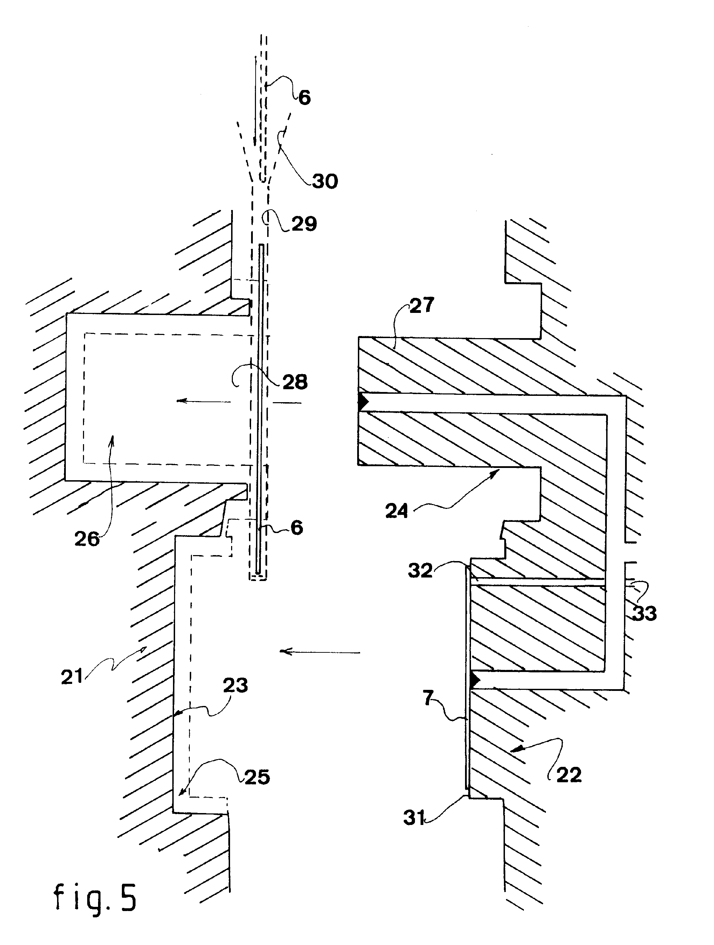

Le procédé pour réaliser une telle boîte 1 consiste tout d'abord à réaliser, plus particulièrement comme illustré sur la figure 5, deux premier 21 et second 22 demi-moules. Chaque demi-moule 21, 22 comporte une empreinte 23, 24 définissant chacune une demi-enveloppe du bac 2, de la charnière 4 et du couvercle 3 lorsque le volume 5 est ouvert (figure 1), les deux empreintes 23, 24 formant, quand les demi-moules 21, 22 sont accolés, un espace vide 25 définissant la forme de l'enveloppe extérieure des bac 2, charnière 4 et couvercle 3 lorsque la boîte est ouverte, c'est-à-dire dans la position représentée sur la figure 1, le premier demi-moule 21 comportant l'empreinte en creux 26 correspondant à la paroi extérieure 8 du bac 2 et le second demi-moule 22 comportant l'empreinte en relief 27 correspondant à la paroi intérieure de ce même bac 2.

Quand les deux demi-moules 21, 22 sont ainsi réalisés et tenus éloignés l'un de l'autre (figure 5), une première étiquette 6 est amenée et maintenue devant l'entrée 28 de l'empreinte en creux 26 de la paroi extérieure du bac 2 réalisée sur le premier demi-moule 21, et avantageusement en regard de l'empreinte en relief 27 de la paroi intérieure du bac réalisée sur le second demi-moule 22.

La première étiquette 6 est amenée par tout moyen, et généralement par des moyens automatiques qui comprennent de façon schématique un bras suceur qui prélève par aspiration une étiquette 6 dans une réserve et qui, après déplacement, la lâche au-dessus de deux glissières opposées 29 situées de part et d'autre de l'entrée 28 de l'empreinte en creux 26. Les entrées de ces deux glissières sont conformées en entonnoir 30 et les glissières guident l'étiquette 6 jusque devant l'entrée 28, la position de cette étiquette 6 étant définie, par exemple, par des butées sur les glissières. L'étiquette est maintenue dans les deux glissières par les extrémités de deux de ses branches opposées, les glissières étant distantes l'une de l'autre d'une valeur supérieure à la largeur de l'entrée 28 de l'empreinte en creux 26. Ces moyens sont donnés à titre d'exemple mais il est bien évident que d'autres pourraient être envisagés sans changer la nature de l'invention.

Le procédé consiste aussi, simultanément ou successivement, à amener et maintenir la seconde étiquette 7 plaquée contre l'empreinte 31 du couvercle réalisée sur le second demi-moule 22. Les moyens qui permettent d'amener cette seconde étiquette 7 peuvent aussi être constitués, par exemple, par un bras suceur qui prélève par aspiration une étiquette 7 dans une réserve et qui l'amène au contact de cette empreinte 31. En revanche, les moyens qui permettent de maintenir cette étiquette contre l'empreinte 31 sont avantageusement constitués par un logement 32 réalisé en surface de cette empreinte 31 dans lequel il est possible de réaliser un vide en connectant ce logement 32 à une pompe à vide (non représentée) par un conduit 33. De cette façon, l'étiquette 7 est maintenue plaquée contre l'empreinte 31 par la pression atmosphérique. Ces moyens sont mis en oeuvre préférentiellement mais il est bien évident que d'autres peuvent utilisés sans changer la nature de l'invention.

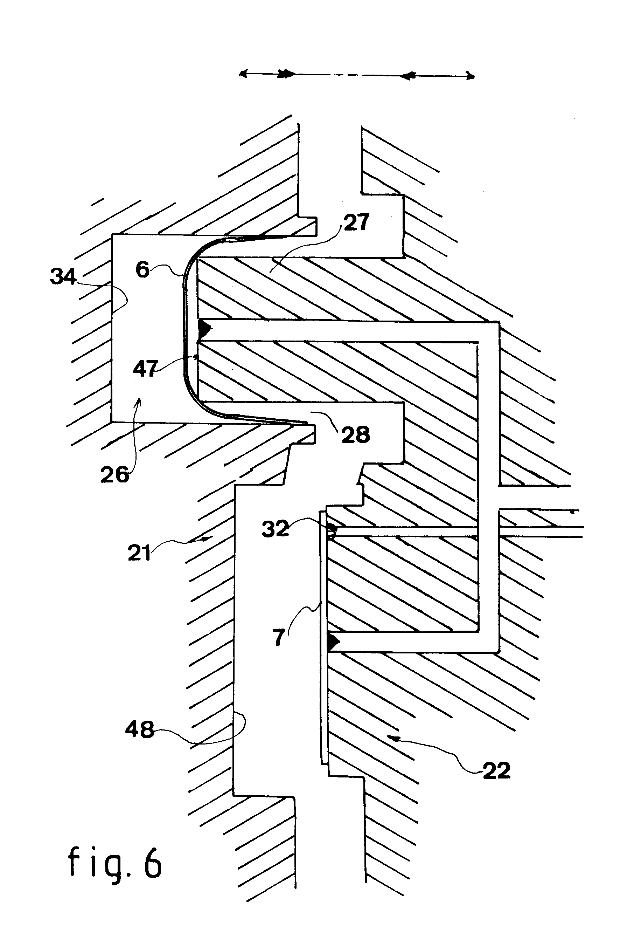

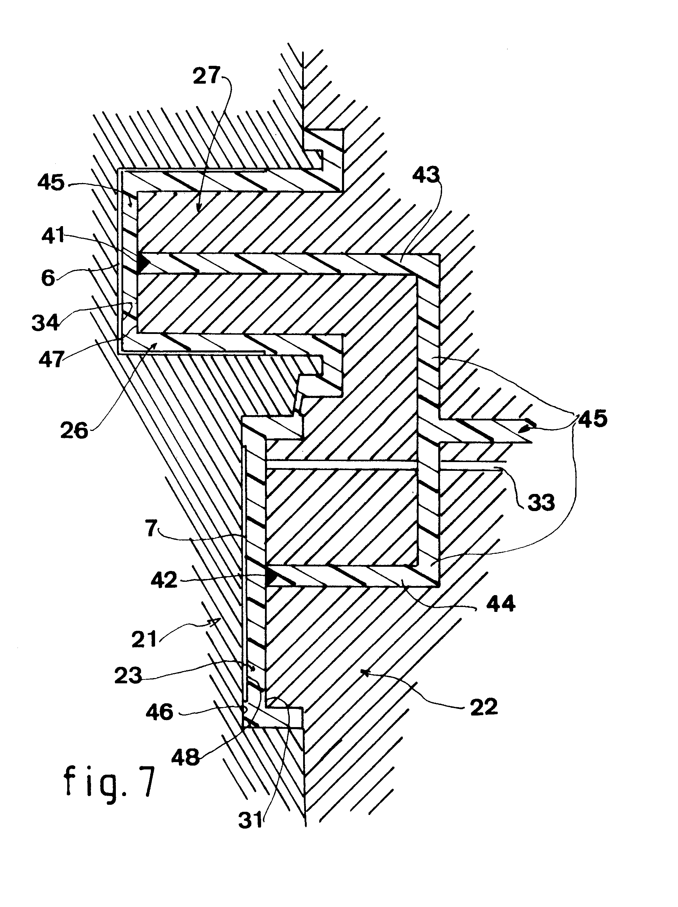

Quand les deux étiquettes 6, 7 sont disposées en coopération avec les deux demi-moules 21, 22 comme décrit ci-dessus, le procédé consiste ensuite à déplacer les deux demi-moules 21, 22 (figure 6) au moins l'un vers l'autre pour les amener au contact l'un de l'autre (figure 7) et former l'espace vide 25 définissant l'enveloppe extérieure des bac 2, charnière 4 et couvercle 3. Pendant ce mouvement de rapprochement des deux demi-moules 21,22, l'empreinte en relief 27 de la paroi intérieure du bac 2 pousse la première étiquette 6 (figure 6) vers le fond 34 de l'empreinte en creux 26 de la paroi extérieure du bac 2. En poussant cette étiquette dans l'empreinte en creux, l'empreinte en relief dégage ses extrémités des deux glissières 29 et plie ses branches. Lorsque l'étiquette est entièrement dégagée des deux glissières, celles-ci sont escamotées pour ne pas gêner le complet rapprochement des deux demi-moules 21, 22.

Quand les deux demi-moules sont venus au contact pour former l'espace vide 25, de la matière moulable en fusion 45 est injectée dans cet espace 25, jusqu'à le remplir.

Cette injection est effectuée simultanément par au moins deux premier et second points d'injection, constitués par exemple par deux buses d'injection 41, 42, alimentés via des canaux 43, 44 par une source de matière moulable en fusion (non représentée).

Ces deux buses 41, 42 se trouvent toutes les deux sur le second demi-moule 22, respectivement sur le sommet 47 de l'empreinte en relief 27 de la paroi intérieure du bac et sur l'empreinte 31 du couvercle, en des endroits où elles sont en regard respectivement des deux étiquettes 6, 7 lorsque les deux demi-moules sont accolés.

Quand la matière moulable en fusion 45 commence à pénétrer dans l'espace 25 en étant éjectée par les buses 41, 42, l'aspiration dans le conduit 33 est coupée, ce qui relâche le maintien de l'étiquette 7. De cette façon, la matière moulable en fusion repousse cette seconde étiquette 7 contre l'empreinte 48 du couvercle située sur le premier demi-moule 21, c'est-à-dire contre la paroi extérieure 46 du couvercle. l'injection de la matière moulable en fusion est maintenue jusqu'à ce que l'espace 25 soit complètement rempli, l'étiquette 6 étant alors parfaitement plaquée contre le fond 34 de l'empreinte en creux 26 du bac et l'étiquette 7 étant parfaitement plaquée contre l'empreinte 48 du couvercle dans le demi-moule 21, comme représenté sur la figure 7.

Quand l'espace 25 est complètement rempli de matière moulable en fusion, l'injection est arrêtée et on laisse la matière contenue dans l'espace 25 se solidifier, cette solidification étant relativement rapide car la masse des deux demi-moules 21,22 est importante par rapport à la quantité de matière injectée. Les deux demi-moules sont ensuite écartés l'un de l'autre et la pièce moulée, sur laquelle sont collées les deux étiquettes 6, 7 comme représenté sur les figures 1 et 2, est éjectée de l'un des deux demi-moules selon une technique connue en elle-même, par exemple au moyen de jets d'air comprimé qui débouchent à différents niveaux des empreintes 23, 24, pour obtenir la boîte telle que décrite au préambule de la présente description définitivement réalisée.

Le procédé décrit ci-dessus est particulièrement intéressant car il permet de réaliser, en une seule opération de moulage et sans aucune intervention manuelle, une boîte complète avec des étiquettes sur le bac et le couvercle.

## Revendications

1. Procédé pour réaliser une boîte (1) comportant:
- un bac (2),
- un couvercle (3),
- une charnière (4) reliant le couvercle et le bac de façon que ledit couvercle puisse venir, par rotation, recouvrir ledit bac et délimiter ainsi un volume fermé (5), le bac, la charnière et le couvercle étant réalisés d'une seule pièce en une matière moulable, et
- deux première (6) et seconde (7) étiquettes disposées respectivement sur au moins le fond (8) dudit bac et sur ledit couvercle (3) de façon qu'elles soient situées sur la paroi extérieure (9, 10) dudit bac et dudit couvercle quand ce dernier recouvre ledit bac, caractérisé par le fait qu'il consiste à:
- réaliser deux premier (21) et second (22) demi-moules, chaque demi-moule comportant une empreinte (23, 24) définissant une demi-enveloppe du bac, de la charnière et du couvercle lorsque ledit volume est ouvert, ces deux empreintes formant, quand les demi-moules sont accolés, un espace vide (25) définissant la forme de l'enveloppe extérieure desdits bac, charnière et couvercle lorsque ledit volume est ouvert, le premier demi-moule (21) comportant l'empreinte en creux (26) correspondant à la paroi extérieure dudit bac et le second demi-moule comportant l'empreinte en relief (27) correspondant à la paroi intérieure dudit bac,
- amener et maintenir la première étiquette (6) devant l'entrée (28) de l'empreinte en creux de la paroi extérieure dudit bac,
- amener et maintenir la seconde étiquette (7) contre l'empreinte (31) dudit couvercle sur le second demi-moule,
- déplacer au moins l'un des deux premier (21) et second (22) demi-moules pour les amener au contact de l'autre et former ainsi ledit espace vide (25), l'empreinte en relief (27) de la paroi intérieure du bac poussant la première étiquette (6) vers le fond (34) de l'empreinte en creux (26) de la paroi extérieure dudit bac,
- injecter de ladite matière de moulage en fusion (45) dans ledit espace vide jusqu'à le remplir, simultanément par au moins deux premier et second points d'injection se trouvant respectivement au sommet de l'empreinte en relief (27) de la paroi intérieure dudit bac et sur l'empreinte (31) dudit couvercle située sur ledit second demi-moule (22), en des endroits où ils sont en regard respectivement des deux première et seconde étiquettes (6, 7) lorsque les deux demi-moules (21, 22) sont accolés, ladite injection de matière moulable s'effectuant tout en relâchant le maintien de ladite seconde étiquette (7) de façon que la matière moulable en fusion repousse cette seconde étiquette (7) contre l'empreinte (48) du couvercle située sur le premier demi-moule (21),
- laisser solidifier ladite matière moulable introduite dans ledit espace vide,
- éloigner au moins l'un des deux demi-moules (21, 22) de l'autre quand la matière contenue dans ledit espace est solidifiée, et à
- éjecter de l'un des deux demi-moules, ladite boîte (1) ainsi réalisée.

2. Procédé selon la revendication 1, caractérisé par le fait que le maintien de ladite seconde étiquette (7) contre l'empreinte (31) dudit couvercle sur le second demi-moule (22) est effectué au moyen de la pression atmosphérique.

3. Procédé selon l'une des revendications 1 et 2, caractérisé par le fait que la première étiquette (6) est amenée devant l'entrée (28) de l'empreinte en creux (26) de la paroi extérieure du bac en la laissant tomber dans deux glissières opposées (29) situées de part et d'autre de ladite entrée de l'empreinte en creux, les entrées des deux glissières étant conformées en entonnoir (30) et les glissières guidant la première étiquette (6) jusque devant ladite entrée (28), la position de cette étiquette (6) étant définie par des butées, ladite première étiquette étant maintenue dans les deux dites glissières par deux de ses extrémités, les deux dites glissières (29) étant distantes l'une de l'autre d'une valeur supérieure à la largeur de l'entrée (28) de l'empreinte en creux (26).

4. Procédé selon l'une des revendications 1 à 3, caractérisé par le fait que ladite seconde étiquette (7) est amenée au contact de ladite empreinte (31) dudit couvercle située sur ledit second demi-moule (22) au moyen d'un bras suceur prélevant par aspiration une dite étiquette (7) dans une réserve.
